# EUROPEAN PATENT SPECIFICATION

(11) **EP 4 695 326 B1**
(45) Date of publication and mention of the grant of the patent: **27.05.2026**
(21) Application number: 25703946.1
(22) Date of filing: 11.02.2025
(51) Int. Cl.: C08J 11/10, C08J 11/26

(54) **RECYCLING METHOD OF THERMOSET SPECTACLE LENS MATERIAL AND RELEVANT SPECTACLE LENS MATERIALS**
RECYCLINGMETHODE VON DUROPLASTISCHEM BRILLENGLASMATERIAL UND RELEVANTEN BRILLENGLASMATERIALIEN
PROCEDE DE RECYCLAGE DE MATERIAU THERMODURCISSABLE POUR VERRES DE LUNETTES ET MATERIAUX DE VERRES DE LUNETTES CORRESPONDANTS

(30) Priority: 12.02.2024 WO PCT/CN2024/077166
(43) Date of publication of application: 18.02.2026
(73) Proprietor: Carl Zeiss Vision International GmbH, 73430 Aalen (DE)
(72) Inventor: MERGEL-KUEHN, Olga, 73430 Aalen (DE); NOVELLI, Emanuele, 73447 Oberkochen (DE); WAGEMANN, Ernst Ulrich, 73430 Aalen (DE); WINDBIEL, Julian, 73430 Aalen (DE); WAN, Yucheng, Guangzhou, Guangdong 510555 (CN); LI, Jianyuan, Guangzhou, Guangdong 510555 (CN)
(74) Representative: Carl Zeiss AG - Patentabteilung
(86) International application number: PCT/EP2025/053601
(87) International publication number: WO 2025/172300

(56) References cited:
- WO-A1-2017/168325
- WO-A1-2021/200892
- CN-A- 103 483 620
- US-A1- 2023 365 770
- US-B2- 10 822 467
- US-B2- 11 339 268
- US-B2- 11 702 501

## Description

The present invention relates to a method configured to recycle a thermoset spectacle lens material and a recycled thermoset spectacle lens material. The present invention is further directed to a method configured to manufacture a recyclable thermoset spectacle lens material and a thermoset spectacle lens material manufactured therefrom.

In the ophthalmic industry, the thermoset spectacle lens materials are currently widely used as spectacle lenses due to their superior properties such as optical clarity, or mechanical stability. However, due to the crosslinked structure, the spectacle lenses cannot be reformed or reprocessed after curing, and thus cannot be recycled. Further, potentially reusable spectacle lenses that do not pass quality control during the production also cannot be recycled. Instead, the spectacle lens wastes have to be incinerated, exported or sent to landfill. Incineration, export and disposal have, thus, a negative impact on economic costs and negative environmental impacts such as accumulation of plastics and microplastics as well as higher CO₂ emission. Moreover, these processes are also a waste of valuable resources.

Various solutions have been suggested and developed to resolve the plastic waste problem. Mechanical recycling involves processing plastic waste into secondary raw material without significantly altering the material's chemical structure. For example, the plastic waste can be transformed into flakes, granules, or powder to be again used in the production of new materials. Chemical recycling such as gasification, pyrolysis, solvolysis, alcoholysis, and/or depolymerization aims to reduce the need for virgin fossil resources by changing the structure of the polymeric waste and transforming it into chemical building blockings, including monomers, which can be again used as raw materials in chemical processes. In particular, depolymerization processes use different combinations of chemicals, solvents and heat to break down polymers into monomers and oligomers. Gasification and pyrolysis processes use heat and pressure to break down the plastic waste into a liquid, oil like feedstock or gaseous feedstock or combination of both which is used as secondary raw material. Furthermore, recently, a variety of chemistries have been employed or developed with the aim to achieve polymer networks which can be reprocessed, so-called covalent adaptable or associative networks (CANs) or dynamic covalent polymer networks (DCPNs), to allow reformability of crosslinked polymers. Such reformable polymers are also called vitrimers. Associative CANs do not depolymerize and exhibit constant cross-link density when changing temperature. Vitrimers are permanent networks of polymer chains connected via dynamic covalent bonds, which allow the network to change its topology while maintaining a constant number of chemical bonds. Dynamic covalent bonds are reversible and can rapidly reach thermodynamic equilibrium in response to a stimulus. The process which changes the crosslinked or permanent networks of the thermoset materials into the covalent adaptable networks or dynamic networks that are reformable by application of a particular stimulus, such as heating, light irradiation, etc. is called vitrimerization. The term "catalyzed vitrimerization" in the present application refers to a vitrimerization where the reaction is enabled by the use of a catalyst. Despite the progress made in the vitrimerization technology in the recent years, critical problems remain as unsolved for specific applications. Some vitrimerization processes turned out to deliver recycled material with an insufficient quality to be used further or a material that requires additional process steps which make the process complicated and expensive.

Each of the recycling processes including vitrimerization are specifically designed and adjusted depending on the type and properties of the plastic waste. As every plastic waste has a different polymeric structure from different monomers, production methods and hence different properties, a certain recycling method suitable for one plastic polymer frequently turned out to be less suitable or even useless for the other.

After a lot of trial and error and extensive research and development on recycling of thermoset spectacle lens materials in every possible direction, the present inventors have discovered that specific thermoset spectacle lens materials can show dynamic behavior, hence, exhibit vitrimeric properties and that a particular vitrimerization process would lead to a recycled spectacle lens material having a remarkable quality for spectacle lenses. Such behavior of thermosets showing a rearrangement of the crosslinks within the polymer network under specific conditions can lead to remoldability of the material and stress-relaxation within the material, resulting in economical and feasible recycling of the thermoset plastic spectacle lens materials. Going one step further, the inventors were successful in deriving a more economical recycling method of the thermoset spectacle lens materials based on the idea that the specific thermoset spectacle lens materials intrinsically comprise exchangeable functional groups causing the covalent adaptable network under a specific condition even without the need of adding additional feedstocks or additional free reactive functional groups during the recycling process, which were required in the conventional vitrimerization process. Furthermore, recyclable thermoset spectacle lens material has been successfully manufactured based on the new method. CN103483620A, US2023/365770A1 and WO2021/200892A1 disclose procedures to recycle spectacle lens material involving a catalysed depolymerization reaction, but none of these documents disclose a vitrimerization reaction and a yellow index and/or haze of the starting material and of the recycled material.

Liang Yue et al., "Vitrimerization: Novel Concept to Reprocess and Recycle Thermoset Waste via Dynamic Chemistry", Global Challenges 2019, reported that the thermoset material that has ester groups and freely available hydroxyl groups can be infused with a catalyst and can be converted into a vitrimer. However, as the target thermoset spectacle lenses does not have the above specific functional groups, it was difficult to apply this method to the target thermoset spectacle lens materials. Furthermore, the recycled spectacle lens materials showed decreased properties such as ultimate strength, extensibility, etc.

William R. Dichtel et al. showed in "Reprocessable Acid-Degradable Polycarbonate Vitrimers", Macromolecules 51, 2018, 389 - 397 the synthesis and remolding of a polycarbonate vitrimer material containing free hydroxyl groups in the polymer backbone. In particular, the material was synthesized from cyclic carbonates and diols using titanium tetra(isopropoxylate) as catalyst. The material as well as the recycled material showed insufficient optical properties to be used as spectacle lens materials, especially showing significant yellowness as visible from the respective figures. In addition, the materials softening temperature around 50°C used in this paper is insufficient for use as a spectacle lens material.

Francesco Gamardella, et al., "Recyclable poly(thiourethane) vitrimers with high Tg. Influence of the isocyanate structure", Reactive and Functional Polymers 151 (2020) was successful in reforming several polythiourethanes synthesized using three different isocyanates. In particular, trimethylolpropane tris(mercaptopropionate) was mixed with different diisocyanates and a catalyst. The eventually obtained recycled polymers however showed significantly increased yellowness as is apparent from the figures. This confirms that that the obtained recycled polymer cannot be used as a spectacle lens material.

US 10822467 B2 is based on the idea of using the covalent adaptable networks and discloses a method for producing a recyclable thermoset composition comprising one or more of ester-based polyurethane or epoxy resins in combination with using a catalyst in a liquid form. To elicit the reaction, this method contacts the polymer with a liquid catalyst. However, this publication is particularly directed to using transesterification and thus a polymer comprising ester groups in the backbone of the polymer and even available hydroxyl groups on the structure. This method necessarily requires the polymer to have ester groups and hydroxyl groups for the reaction to work. No teaching on the possibility of recycling the thermoset spectacle lens materials which do not include ester groups or epoxy are given. Furthermore, US 10822467 B2 points out that the vitrimerized composition exhibits yellowness due to incorporation of the catalyst, which indicates that the recycled ester-based thermoset polymer and the suggested recycling method are not suitable to produce a lens material. US11702501 B2 and US11339268B2 similarly disclose procedures to recycle thermosetting polymers by means of a vitrimerization reaction, but none of these documents disclose the use of spectacle lens material (let alone with certain yellowness and/or haze properties).

Although the general idea of vitrimerization and various application of vitrimerization to different thermoset materials have been investigated and known as explained above, whether vitrimerization would be successful in specific thermoset products and eventually lead to recycled products with desired property (which can be directly used as a spectacle lens material) remains unclear and the predictability thereof was extremely low.

Starting from US 10822467 B2, it is an objective of the present invention to provide a recycling method particularly suitable for several thermoset plastic spectacle lens materials, which allows the recycled material to be again used as spectacle lens material. Further, in one embodiment of the present invention does not necessarily require additional reactive groups for the recycling. This would add great value to the spectacle lens industry by creating circular economy without any intermediate steps.

According to a first aspect of the present invention, a method configured to recycle a thermoset spectacle lens material is provided. The method provides the thermoset spectacle lens material as particles and/or powder or uses the thermoset spectacle lens material in the form of particles and/or powder, and provides a catalyst that enables, and/or particularly facilitates, reversible exchange reactions of at least one functional group of the thermoset spectacle lens material, wherein the catalyst is dissolved and/or dispersed in a solvent.

The spectacle lens material is the optical material defined according to section 3.3.1 of **DIN EN** ISO 13666:2019-12 as transparent material capable of being manufactured into optical components. The thermoset spectacle lens material may be made of a thermosetting hard resin according to section 3.3.3 of DIN EN ISO 13666:2019-12. The thermoset spectacle lens material of the present invention includes, but not limited thereto, polythiourethane, polyepisulfide, polyallyldiglycol carbonate, polyurethane and/or polyurethane/polyurea. For example, the thermoset spectacle lens material according to the present invention can be at least one of the optical materials mentioned in the following table.

**Table 1: Examples of thermoset optical materials**

| Trade name | Optical material |
|---|---|
| CR-39, CR-330, CR-607, CR-630, RAV 700, RAV 7NG, RAV 7AT, RAV 710, RAV 713, RAV 720 | Polyallyldiglycol carbonate (PADC) |
| RAVolution | Polyurethane |
| Trivex | Polyurea / Polyurethane |
| MR-6, MR-8, MR-7, MR-10 | Polythiourethane |
| MR-174 | Polyepisulfide |

The thermoset spectacle lens material used as a starting material in the present invention can be further defined as a thermoset spectacle lens material having a yellowness index (YI) of 5.5 or less, preferably 2.5 or less, more preferably 1.5 or less. The yellowness index in the present invention is measured according to ASTM E313. By starting with the material having relatively low yellowness index compared to other vitrimerization processes, the present method was successful in obtaining the recycled thermoset spectacle lens material with low yellowness as well, which can be again manufactured into optical components, particularly, spectacle lenses.

Further, the present invention using a catalyst dissolved and/or dispersed in a solvent and providing the thermoset spectacle lens material as particles and/or powder which is particularly suitable for recycling thermoset spectacle lens materials while maintaining the optical property suitable for spectacle lenses. This means that the thermoset spectacle lens materials recycled according to the first aspect of the present invention can be used again as a spectacle lens material, i.e., spectacle lenses.

In a particularly preferred embodiment, the present method provides the recycled thermoset spectacle lens material having a yellowness index (YI) of 5.5 or less, preferably 2.5 or less, more preferably 1.5 or less. As the recycled thermoset spectacle lens materials exhibit the specific range of yellowness index which is within the specific range of yellowness index of the starting thermoset spectacle lens material, the recycled material can be used again as a spectacle lens material. If this yellowness index range cannot be obtained, the thermoset spectacle lens materials are downcycled and cannot be used for producing spectacle lenses, which was the case in the prior art stated above. With this feature, the present method creates circular economy of the thermoset spectacle lens materials and adds significant economic value to the spectacle lens industry.

In a preferred embodiment, the recycled thermoset spectacle lens material prepared according to the present invention has a haze of 2.0 or less, preferably 1.0 or less. Haze is a measure of amount of light that is diffused or scattered when passing through a material. Haze in the present invention is measured in accordance with ASTM D1003. Once prepared, the thermoset spectacle lens material goes through a process which converts the spectacle lens materials into a smaller size such as particles and/or powder, or the thermoset spectacle lens material is provided as a smaller size such as particles and/or powder. In a preferred embodiment, the thermoset spectacle lens material is grinded. The term "particle" according to the present invention refers to any small-sized piece of the spectacle lens material including flakes, chips, pieces, grains, etc.

Providing the spectacle lens materials as smaller pieces such as particles and/or powder significantly increases the surface area of the thermoset spectacle lens materials and facilitates transformation of the crosslinked networks of thermoset spectacle lens materials into the covalent adaptable networks, hence, vitrimerization. It was found that providing the thermoset spectacle lens materials as particles and/or powder also may lower the yellowness index and/or haze of the recycled spectacle lens materials, by potentially increasing homogeneity and shortening the recycling process time allowing the recycled materials to be again used for spectacle lens materials, creating a circular economy.

For the above process, any conventional means which are suitable for thermoset materials can be used, including, but not limited to, cryo mill, jaw crusher, rotor mill, cutting mill, knife mill, mortar grinder, disc mill and ball mill. During the process, it is desired that little thermal stress is given to the materials as thermal stress may lead to a change of parts of the thermoset spectacle lens material which in turn may lead to increased yellowness index or haze. In this sense, cryomilling which includes cooling of the grinding jar may be preferred. Moreover, excessive heat attributes to the thermal stress and may lead to unwanted reactions that increases change in the color of the material and an increase in the haze besides other property changes. Therefore, as duration of heating or even the intensity of heating can be reduced by making the size of the material smaller before subjecting it to the following steps of the recycling process, providing the starting material as particles and/or powder delivers improved property to the recycled spectacle lens material. Specific type of means for this process can be selected depending on the property of the thermoset spectacle lens material.

The thermoset spectacle lens material is prepared into a smaller size, meaning smaller than the spectacle lens material, and in a preferred embodiment, the thermoset spectacle lens material is processed into particles with a diameter of 2.5 mm or less, more preferably 2.0 mm or less, most preferably 1.0 mm or less. With these ranges, homogeneity of the starting material increases, which probably leads to excellent property of the recycled materials.

In the present invention, a catalyst is added to the thermoset spectacle lens material. The catalyst according to the present method is a catalyst that can enable, particularly facilitate, reversible exchange reactions of at least one type of functional group within the material. The term "reversible exchange reaction" refers to a dynamic covalent bond exchange mechanism that allows vitrimers to undergo rearrangement while maintaining a covalently crosslinked network. Unlike conventional depolymerization process, here, the vitrimers maintain crosslinks but reorganize and the vitrimers can be reshaped without complete melting, enabling recycling. The catalyst renders the thermoset spectacle lens material a vitrimer. That is, the catalyst enables and/or facilitates a catalytic vitrimerization. By using an appropriate type of catalyst in a proper form, the dynamic network can be more easily achieved and results in lower yellowness index, lower haze, and superior mechanical properties in the resultant materials. The functional groups which go through reversible exchange reactions by the catalyst according to the present invention are functional groups such as, but not limited to, thiourethane groups, urethane groups, urea groups, carbonate groups, and/or disulfide groups. In a preferred embodiment, the functional group is at least one selected from the group consisting of thiourethane functional group, urethane functional group, urea functional group, carbonate functional group, and disulfide functional group. The reversible exchange reactions between the functional groups increase mobility in the network of the thermoset material. Under these conditions, the material can be manipulated to the extent that it can either be repaired or its shape changed entirely. The introduction of dynamic covalent bonds into the network structure produces a recyclable and reusable thermoset material.

The catalysts should be further selected in consideration of the specific type and properties of the thermoset spectacle lens material subject to the recycling process. Any catalyst that enables and/or facilitates reversible exchange reactions of at least one type of functional group in the thermoset spectacle lens materials while resulting in the recycled thermoset spectacle lens material with a sufficient optical property can be properly selected and used.

Suitable catalysts would be for example, a metal-based catalyst based on zinc, tin, magnesium, cobalt, calcium, titanium, bismuth, iron, hafnium, lanthanum, samarium, dysprosium, erbium, ytterbium and zirconium, e.g. in combination with organic ligands. Example compounds can be dibutyltin dilaurate (DBTDL), dibutyltin dichloride, zinc diacetate, tin di(2-ethylhexanoate), dibutyltin bis(2-ethylhexanoate), dibutyltin diacetate, dibutyltin bis(2,4-pentanediionate), monobutyltin oxide, zinc dioctoate, titanium tetra(2-ethylhexanoate), lanthanide triflates, etc.; a metal-free acid catalyst such as isopropylmethansulfonate (IMS); a metal-free base catalyst such as pyridine or tertiary amines such as triethylamine (TEA). Further metal-free base catalysts can be e.g. 1,5-diazabicyclo[4.3.0]non-5-ene (DBN), 1,8-diazabicyclo[5.4.0]undec-7-ene (DBU), 1,5,7-triazabicyclo[4.4.0]dec-5-ene (TBD), etc.; Suitable latent base catalysts would be e.g. tetraphenylborate salts of organic bases such as DBU, DBN, TBD, 1-methyl imidazole, 4-dimethylaminopyridine (DMAP), tertiary ammonium salts, or benzonate salts of organic bases such as DBU, DBN, TBD, 1-methyl imidazole, DMAP, etc.; suitable catalysts would further be a phosphorous-based catalyst such as triphenylphosphine.

In a preferred embodiment, a metal-based catalyst is used. It was found that the metal-based catalysts are particularly suitable for recycling thermoset spectacle lens materials and as they result in recycled products with excellent optical property, enabling it to be used as a spectacle lens material again. In one embodiment where no metal-based catalyst is used, basic catalysts are preferred over other catalysts as the reaction rate was observed to be faster in causing the reprocessing time to be reduced in thermoset spectacle lens material compared to other catalysts. In another preferred embodiment, aromatic catalysts are refrained from being used as they were found to increase the yellowness index of the recycled thermoset spectacle lens materials. Therefore, in a preferred embodiment, the catalyst used in the present method can be defined as any catalyst that can enable, particularly facilitate, reversible exchange reactions of at least one functional group except for catalysts that deteriorate the optical quality of the recycled spectacle lens material.

In the present method, it is important that the catalyst is dissolved and/or dispersed in a solvent before being used. By doing so, the catalyst can homogeneously contact the starting material and deliver recycled material with high quality. The catalyst is put in a solvent and turned into a solution or dispersion and then placed to be in contact with the thermoset spectacle lens material. The solvent according to the present invention is a solvent that can dissolve and/or disperse the respective catalyst. The solvent can swell the thermoset spectacle lens material. The preferred solvent is an organic solvent which includes, but not limited there to, dichloromethane (DCM), tetrahydrofuran (THF), N,N-dimethylformamide (DMF), dimethylsulfoxide (DMSO), acetone, ethyl acetate, acetonitrile, toluene. The present inventors surprisingly discovered that by using the catalyst dissolved or dispersed in a solvent, the recycled thermoset materials with properties such as yellowness index and haze suitable for optical application are obtained contrary to the method using a catalyst in a solid or pure form.

The amount of the catalyst can be selected in consideration of the type of the catalyst, type of thermoset spectacle lens material to be recycled, other process conditions such as temperature, pressure, duration of the process time, etc. The amount of the catalyst on the other hand should be carefully determined to obtain the recycled thermoset spectacle lens material with optical property to be used as a spectacle lens material. In one embodiment, the amount of the catalyst can be between 0.005 to 20wt%, preferably 0.01 to 15wt%, more preferably 0.01 to 10wt%, most preferably 0.01 to 5wt% of the starting thermoset spectacle lens material. For example, if DBTDL is used as a catalyst, 0.2 to 10wt%, preferably 5 to 10wt%, would be ideal for the polyurethane/polyurea spectacle lenses or polyepisulfide spectacle lenses. Low catalyst concentration may cause a poor reprocessibility and affect the recycling capability of the spectacle lens material, whereas too high catalyst concentration might lead to worse optical performance of the recycled product.

The catalyst is mixed and diffused into the thermoset spectacle lens material after transforming the material to have a smaller size such as particles and/or powder. In one embodiment, additional external stimuli such as high or increased temperature or high or increased pressure can be used to promote vitrimerization. The present method can be performed at a high temperature, preferably, above the glass transition temperature (Tg) of the thermoset spectacle lens material. The term "glass transition temperature" refers to the temperature below which completely or partially amorphous polymers are in a glassy or hard-elastic, brittle state and above which they are in a highly viscous or rubber-elastic state. The glass transition temperature can be determined by e.g., differential scanning calorimetry or dynamic mechanical analysis. The "high temperature" can be achieved by heating and/or increasing a temperature by the input of energy. If the process is performed at a sufficiently high temperature, the exchange reactions between the reactive groups can be facilitated. Conducting the process at a temperature lower than the glass transition temperature of the spectacle lens material may cause a poor reprocessibility and affect the recycling capability of the spectacle lens material. For example, in case of polyallyldiglycolcarbonate, the optical reaction temperature can be between 110 and 150°C.

In one embodiment the increased heat and pressure required for vitrimerization can be realized by a hot press, an infrared heating, an induction heating, a microwave heating, a light-induced heating, an autoclave processing, etc. In a preferred embodiment, the recycled thermoset spectacle lens is manufactured by compression molding using hot pressing as in the working examples.

The vitrimer obtained according to the present method, i.e., the recycled thermoset spectacle lens material having a covalent adaptable network, is in a solid form.

The present method is particularly advantageous in that no additional feedstock comprising additional free functional groups which take part in the reversible exchange reactions need to be added for the vitrimerization to take place. Here, the term "additional free functional group" indicates free functional groups other than the free function groups already present in the spectacle lens material which is added in a form of a feedstock or a compound comprising the free functional groups. The additional free functional group exists as in an excess in the mixture with the spectacle lens material to be recycled.

In such a case, the thermoset spectacle lens materials according to the present invention already and intrinsically comprise the free functional groups which can potentially undergo reversible exchange reactions. In this specific preferred embodiment, the thermoset spectacle lens material can be selected from the group consisting of polythiourethane, polyepisulfide, polyurethane and polyurethane/polyurea.

In one embodiment, the network of the thermoset spectacle lens material where the catalyst is comprised therein is turned into covalent adaptable networks based on thiotranscarbamoylation or transcarbamoylation. In such a case, the thermoset spectacle lens material is a polythiourethane spectacle lens material, or is a polyurea/polyurethane spectacle lens material, or a polyurethane spectacle lens material.

The polythiourethane spectacle lens material according to the present invention can be obtained from (i) polyisocyanate compounds and (ii) polythiol compounds. The polythiourethane spectacle lens material comprises thiourethane groups and thiol groups; or comprises thiourethane groups. The specific examples of the polythiourethane spectacle lens material may include, but not limited to, MR-6 (refractive index: 1.60), MR-7 (refractive index: 1.67), MR-8 (refractive index: 1.6), MR-10 (refractive index 1.67) from Mitsui Chemicals.

When mixed and infused with a catalyst dissolved and/or dispersed in a solvent, the polythiourethane spectacle lens material goes through reversible exchange mechanism based on thiotranscarbamoylation reaction. To elaborate, in the polythiourethane spectacle lens material comprising thiol group and thiourethane group in the polymer structure, for example, the thiol group (HSR₂ in Scheme 1 below) and the thiourethane group (R₁S-C(O)NHR) in Scheme 1) go through reversible exchange reactions in form of a chemical equilibrium as shown in Scheme 1 when mixed and a catalyst in a liquid form is added thereto, increasing mobility in the network of the spectacle lens material.

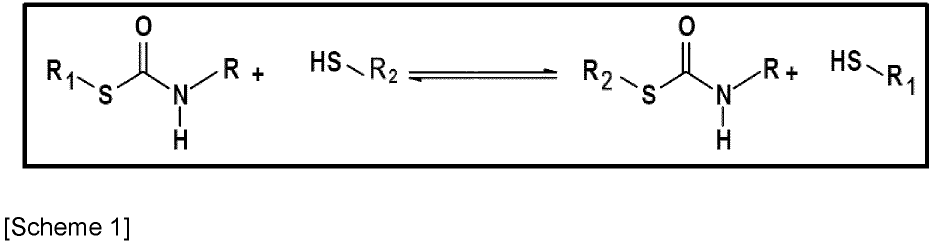

On the other hand, in a polythiourethane spectacle lens material comprising thiol group and thiourethane (thiocarbamate) groups or only thiourethane groups in the polymer chain, the thiourethane group can also undergo exchange reactions with another thiourethane group thus forming the dynamic covalent network.

In both cases, as the thiol group is already present in the polythiourethane spectacle lens material or not required for the vitrimerization process, no additional feedstock comprising additional free thiol groups needs to be added for the vitrimerization process to take place.

Similarly, covalent adaptable networks can be also created based on transcarbamoylation reaction within the polyurethane spectacle lens material and the polyurea/polyurethane spectacle lens material.

The polyurethane spectacle lens material can be obtained by (i) polyisocyanate compounds and (ii) polyol compounds. The polyurethane spectacle lens material comprises urethane groups or comprises urethane groups and hydroxyl groups. The polyurethane spectacle lens material therefore comprises urethane bonds. The specific example of the polyurethane spectacle lens material may include, but not limited to, RAVolution (refractive index: 1.50) from Mitsui Chemicals. As hydroxyl groups are already comprised in the polyurethane spectacle lens material or as transcarbamoylation happens between urethane bonds, unlike conventional technology, additional feedstock comprising free hydroxyl groups does not need to be added separately.

The polyurea/polyurethane spectacle lens material according to the present invention can be obtained by (i) polyisocyanate compounds, (ii) polyol compounds and (iii) polyamine compounds. The polyurea/polyurethane spectacle lens material comprises urea groups and urethane groups, and optionally hydroxyl groups and/or amine groups in the polymer. The polyurea/polyurethane spectacle lens material thus comprises urethane bonds and urea bonds. The specific examples of the polyurethane/polyurea spectacle lens material may include, but not limited to, Trivex (refractive index: 1.53) from PPG Industries. As hydroxyl groups and/or amine groups are already in the polyurea/polyurethane spectacle lens material or as transcarbamoylation happens between urethane bonds, unlike conventional technology, hydroxyl or amine feedstock does not need to be added separately.

In another embodiment, the thermoset spectacle lens material is turned into covalent adaptable networks based on disulfide metathesis. In such a case, the thermoset spectacle lens material is a polyepisulfide spectacle lens material comprising disulfide bonds.

Polyepisulfide spectacle lens materials can be obtained from the reaction of at least one polyepithio (polyepisulfide) monomer or oligomer and at least one thiol compound. The polyepisulfide spectacle lens material comprises disulfide groups, or disulfide groups and thiol groups.

The specific examples of the polyepisulfide spectacle lens material may include, but not limited to, high index materials described in US 10954341 B2. When mixed with a catalyst dissolved and/or dispersed in a solvent, the polyepisulfide spectacle lens material goes through reversible exchange mechanism based on disulfide exchange reaction (disulfide metathesis) and/or disulfide-thiol exchange reactions as shown in Schemes 2 and 3 below.

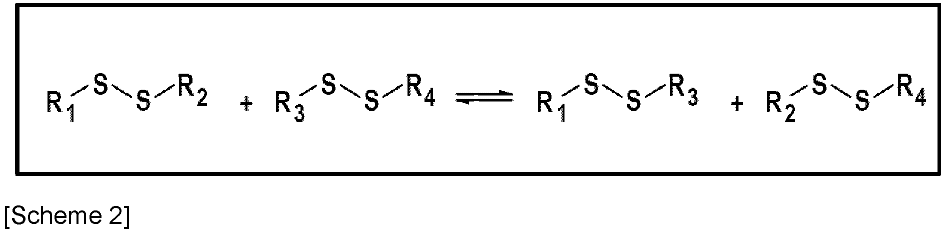

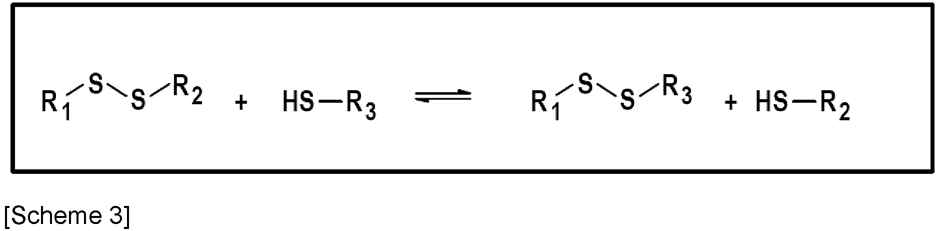

As the least foreign material is added to the thermoset spectacle lens material, the quality and property of the recycled material including lowered yellowness are greatly enhanced, and the recycled material can be again used as a spectacle lens material. Moreover, this method poses the advantage of economic feasibility and simplicity. Nonetheless, it should be noted that the present method does not exclude the embodiment including a step of adding additional free functional groups such as hydroxyl groups, thiol groups, and/or amine groups to the reaction as will be explained in the following.

In addition, the present inventors were successful in recycling a polyallydiglycocarbonate spectacle lens material for the first time by adding hydroxyl groups and a catalyst dissolved and/or dispersed in a solvent and turning it into a covalent adaptable network based on transcarbonation. This was particularly remarkable since no prior art has reported or has been successful in recycling the polyallydiglycolcarbonate thermoset with the quality of a recycled spectacle lens material suitable for optical products.

The polyallyldiglycolcarbonate spectacle lens material according to the present invention can be obtained by polymerization or copolymerization of diethyleneglycol bis allylcarbonate. The polyallyldiglycolcarbonate spectacle lens material comprises carbonate groups. The specific examples of the polyallyldiglycolcarbonate spectacle lens material may include, but not limited to, CR39, CR330, CR607, CR630 (refractive index: 1.50) from PPG Industries, RAV700, RAV 7NG, RAV 7AT, RAV 710, RAV 713, RAV 720 (refractive index: 1.50) from Mitsui Chemicals.

When mixed with a catalyst and free hydroxyl groups in a liquid form and swollen, the carbonate bond in the polyallyldiglycolcarbonate spectacle lens material can show covalent dynamic behavior via transcarbonation reactions. Unlike other thermoset spectacle lens materials mentioned above, polyallydiglycolcarbonate spectacle lens material necessarily requires additional free hydroxyl groups for the vitrimerization to take place. Therefore, in this embodiment, the present method is characterized by further comprising providing additional free hydroxyl groups to the polyallydiglycolcarbonate spectacle lens material as shown in Scheme 4.

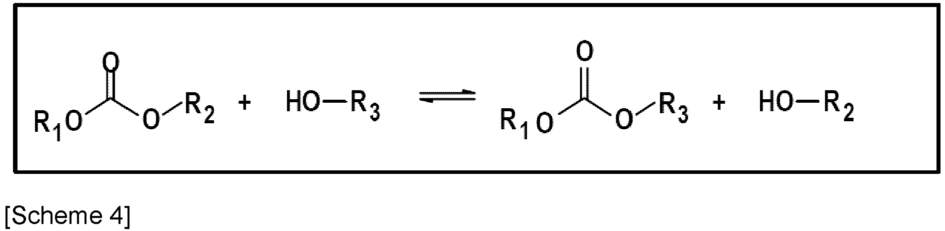

This was particularly surprising in that even if foreign substances such as hydroxyl groups are introduced, the resulting recycled material showed suitable yellowness index and haze for spectacle lenses as long as the starting material is provided as particles and/or powder and the reaction was enabled and/or facilitated by a catalyst dissolved and/or dispersed in a solvent.

Additional free hydroxyl groups can be provided by any polyol with two or more hydroxy groups such as but not limited to: ethylene glycol, glycerol, pentaerythritol, dipentaerythritol (DPE).

Likewise, the present method for the thermoset spectacle lens materials other than polyallyldiglycolcarbonate spectacle lens material may optionally include a step of adding additional free functional groups selected from the group consisting of hydroxyl groups, thiol groups, and/or amine groups to further facilitate the reaction. Additional reactive functional groups would also further shorten the process time which ultimately reduces the thermal stress.

In particular, the method configured to recycle the polythiourethane spectacle lens material according to the present invention may optionally comprise adding additional free thiol groups; the method configured to recycle the polyurethane spectacle lens material according to the present invention may optionally comprise adding additional free hydroxyl groups; the method configured to recycle the polyurea/polyurethane spectacle lens material according to the present invention may optionally comprise adding additional free hydroxyl groups and/or amine groups; and the method configured to recycle the polyallyldiglycolcarbonate spectacle lens material according to the present invention comprises adding additional free hydroxyl groups.

Additional free thiol groups can be provided by any polythiol with two or more thiol groups such as but not limited to: ethylene glycol dimercaptopropionate, ethylen glycol dimercaptoacetate, pentaerythritol tetramercaptopropionate, pentaerythritol tetramercaptoacetate, trimethylol propane trimercaptopropionate.

Additional free amine groups can be provided by any polyamine with two or more amine groups such as but not limited to: ethylene diamine, diethylene triamine, tris(2-aminoethyl)amine).

In addition, a mixture of free hydroxy groups, free thiol groups and free amine groups can be provided by any polyfunctional compound with the respective functional groups but not limited to: mercapto ethanol, ethanolamine, pentaerythritol trimercaptopropionate.

As used in the working examples, the additional free functional group is added in a low amount. In one embodiment, it can be 15% by weight or less, or 10% by weight or less, or 5% by weight or less.

Further, the thermoset spectacle lens material may further comprise additives such as colorants, UV absorbers, mold release agents, antioxidants, antifoaming agents and organic or inorganic particles, etc. It is surprising that the optical quality and property of the thermoset spectacle lens material is maintained or not significantly deteriorated after the recycling even though the spectacle lenses in the market contain these kinds of additives and the starting material of the present invention also contains them. The inventors unexpectedly discovered that these additives do not significantly affect the optical quality and property of the material recycled by the present method, and thus do not necessarily have to be removed or isolated from the used spectacle lens material. This would lead to economic feasibility and simplicity of the method.

After the thermoset spectacle lens material transformed into a smaller size such as particles and/or powder is swollen by the solution and/or dispersion of the catalyst and optionally providing additional free functional groups such as hydroxy groups, thiols and/or amines, the solution and/or dispersion is separated from the swollen thermoset spectacle lens material and excessive catalyst and optional additional free functional groups are removed through a washing process using a suitable solvent. Excess solvent is removed afterwards, and the swollen thermoset lens spectacle lens material is dried. Properly removing the solvents is preferred as the solvents left on the surface and within the polymer network will adversely affect the optical and mechanical property of the recycled material.

The mixture of the thermoset spectacle lens material and the catalyst can then be formed in a desired form at a high temperature and a certain pressure via conventional lens manufacturing techniques such as compression, injection molding, and extrusion. The temperature and pressure can be set according to the conventional spectacle lens production conditions. The temperature can be between 70 to 250°C, preferably 70 to 200°C, more preferably 100 to 200°C, most preferably 110 to 150°C. The pressure can be between 1 to 20Mpa, preferably 5 to 18 MPa. In one embodiment, the thermoset spectacle lens material and the catalyst are molded using a hot press device.

The thus-produced, recycled spectacle lens material shows no significant loss of mechanical, thermal as well as optical properties. The haze and yellowness index were also observed to be suitable for the further optical use for the spectacle lens.

Accordingly, the present method can be a method configured to manufacture a spectacle lens with the thus-recycled spectacle lens material. Further, the present method can repeatedly recycle the spectacle lens manufactured with the recycled spectacle lens material. This manufacturing method cuts, preferably grinds, the spectacle lens manufactured with the recycled spectacle lens material into a smaller size such as particles and/or powder, and reforms the cut or grinded spectacle lens without adding a catalyst. As the catalyst is already present in the spectacle lens material manufactured with the spectacle lens material recycled by the present method, addition of catalyst is no more required for the subsequent recycling of the spectacle lens.

All the matters explained above regarding the first aspect of the present invention are also identically applied to the second, third, fourth and fifth aspects of the present invention unless specifically explained otherwise.

According to a second aspect of the present invention, the recycled thermoset plastic spectacle lens material produced according to the method of the first aspect of the present invention is provided. The recycled thermoset spectacle lens material still comprises the catalyst that enables and/or facilitates the reversible exchange reactions of at least one functional group in the thermoset spectacle lens material and performs a catalytic vitrimerization of the thermoset spectacle material during subsequent recycling of the recycled thermoset spectacle lens material. The phrase "during subsequent recycling of the recycled thermoset spectacle lens material" refers to the further recycling that takes place after the already recycled thermoset spectacle lens material has been used and discarded. As the catalyst used in the recycling process using vitrimerization is not consumed, the catalyst remains in the recycled thermoset plastic spectacle lens material and available for the next recycling process using vitrimerization. This significantly contributes to the circular economy of the spectacle lens materials. The recycled thermoset plastic spectacle lens material is characterized by having a yellowness index (YI) of 5.5 or less, preferably 2.5 or less, more preferably 1.5 or less. The recycled thermoset plastic spectacle lens material may be further charactered by having a haze of 2.0 or less, preferably 1.0 or less. A recycled thermoset plastic material with the yellowness index and/or haze suitable for the spectacle lens was not able to be obtained until the present invention.

The recycled thermoset spectacle lens material can be selected from the group consisting of polythiourethane, polyepisulfide, polyallyldiglycol carbonate, polyurethane and/or polyurethane/polyurea. Further, as the recycled thermoset spectacle lens material can be also recycled by using the spectacle lenses in the market, it may further comprise additives such as colorants, UV absorbers, mold release agents, antioxidants, antifoaming agents and organic or inorganic particles, etc.

As explained regarding the first aspect of the invention, the catalyst of the present invention is not limited as long as it can enable, and/or particularly facilitate, reversible exchange reactions of one or more types of functional groups. The catalyst of the present invention performs a catalytic vitrimerization.

According to a third aspect of the present invention, a method configured to manufacture a thermoset spectacle lens material which can be recycled without adding any foreign materials is provided. The thermoset spectacle lens material according to the third aspect of the present invention can be recycled and manufactured into a spectacle lens by being provided in a smaller size such as particles and/or powder, and then formed into a desired form at a high temperature and a certain pressure via conventional lens manufacturing techniques such as compression molding, injection molding, and extrusion. The method is configured to manufacture a thermoset spectacle lens material which can be recycled without adding any foreign materials by preparing a thermoset polymer while admixing a catalyst that can enable and/or facilitate the reversible exchange reactions of at least one functional group in the thermoset polymer and performs a catalytic vitrimerization during subsequent recycling of the recyclable thermoset spectacle lens material. The "thermoset polymer" indicates the polymer which is the basis of the recyclable thermoset spectacle lens material. The term "prepare" means polymerization of the polymer. In other words, the method provides the thermoset polymer where monomer and/or oligomer of the thermoset polymer is admixed with a catalyst that enables and/or facilitates the reversible exchange reactions of at least one functional group in the thermoset polymer.

The thus-obtained thermoset spectacle lens material has a yellowness index of 5.5 or less, preferably 2.5 or less, more preferably 1.5 or less, showing the optical property suitable for the spectacle lens material. The thermoset spectacle lens material may further show a haze of 2.0 or less, preferably 1.0 or less. This was surprising as a foreign material such as catalyst is included in the spectacle lens material. Further, the obtained thermoset spectacle lens material is advantageous in that it can be recycled and produce a recycled spectacle lens material having yellowness and/or haze in substantially the same range, which is suitable for spectacle lens material.

The thermoset polymer according to the third aspect of the present invention is at least one selected from the group consisting of polythiourethane, polyepisulfide, polyallyldiglycol carbonate, polyurethane and polyurethane/polyurea. All the features concerning the thermoset spectacle lens material and catalyst explained with regard to the first aspect of the present invention apply the same to the thermoset polymer and catalyst of the third aspect of the present invention, respectively.

The catalyst according to the third aspect of the present invention does not have to be dissolved and/or dispersed in a solvent since it is added from the beginning of the manufacturing process of the thermoset spectacle lens material. The catalyst according to the third aspect has to be soluble within the mixture of monomers and/or oligomers and/or optionally within additives prior to curing the mixture of monomers and/or oligomers and/or optionally within additives to obtain the thermoset spectacle lens material.

A fourth aspect of the present invention is directed to a method configured to recycle the spectacle lens material manufactured according to the third aspect of the present invention. Said method comprises providing the thermoset spectacle lens material manufactured according to the third aspect of the present invention cut into a smaller size such as particles and/or powder, and further comprises reforming the spectacle lens material without adding a catalyst that can enable and/or facilitate the reversible exchange reactions of at least one functional group in the thermoset polymer, thereby performing a catalytic vitrimerization. The recycled thermoset spectacle lens material also exhibits a yellowness index of 5.5 or less, preferably 2.5 or less, more preferably 1.5 or less and/or a haze of 2.0 or less, preferably 1.0 or less. The spectacle lens material can be recycled many times with simple process steps while exhibiting excellent optical property.

According to a fifth aspect of the present invention, a thermoset spectacle lens material which can be recycled without adding any foreign materials and comprises a catalyst dissolved in a solvent that can enable or facilitate the reversible exchange reactions of at least one functional group is provided. The term "foreign materials" refers to any substances that are not part of the original composition of the thermoset spectacle lens material. This includes, but is not limited to, additional catalysts, free functional groups, and other external additives. Said thermoset spectacle lens is characterized by having a yellowness index of 5.5 or less, preferably 2.5 or less, more preferably 1.5 or less and/or a haze of 2.0 or less, preferably 1.0 or less. Here, the thermoset spectacle lens material is selected from the group consisting of polythiourethane, polyepisulfide, polyallyldiglycol carbonate, polyurethane and polyurethane/polyurea. All the features concerning the thermoset spectacle lens material and catalyst explained with regard to the first aspect of the present apply the same to the thermoset polymer and catalyst of the fifth aspect of the present invention, respectively.

To be specific, the fifth aspect of the present invention is directed to a thermoset spectacle lens composition comprising a thermoset spectacle lens material, characterized in that the composition further comprises a catalyst that enables and/or facilitates the reversible exchange reactions of at least one functional group in the thermoset spectacle lens material and performs a catalytic vitrimerization during subsequent recycling of the manufactured spectacle lens, wherein the thermoset spectacle lens composition and the spectacle lens manufactured therefrom have a yellowness index of 5.5 or less measured according to ASTM E313 and/or a haze of 2.0 or less measured according to ASTM D1003, and the manufactured spectacle lens can be recycled by vitrimerization without adding foreign materials. As the composition already includes a catalyst for vitrimerization from the first place, it can be easily recycled without any foreign materials, which adds significant advantages in terms of efficiency to the recycling process. Further, the present invention is also directed to the spectacle lens material manufactured by using the thermoset spectacle lens composition according to the fifth aspect, which can be recycled by vitrimerization without adding foreign materials.

The present invention can be further explained according to the following experimental examples.

### EXAMPLE 1

50 g MR-7 material from Mitsui Chemicals was cryomilled to an averaged particle size of 1.5 mm. The grinded material was mixed with a solution of 10wt% of DBTDL in THF. The mixture was kept at 50°C for 4 days. Afterwards, the mixture was filtered and the remaining solid was washed with THF. The resulting solid was dried under a vacuum for 12 hours and was compressed using a hot press at 110°C and a pressure of 8 MPa for 2 hours. The resulting sample showed a yellowness index of below 5.5.

### EXAMPLE 2

50 g MR-8 material from Mitsui Chemical was cryomilled to an averaged particle size of 2.0 mm. The grinded material was mixed with a solution of 10wt% of DBTDL and 5wt% of ethylene glycol di(mercaptopropionate) in dichloromethane. The mixture was kept at room temperature for 48 hours. Afterwards, the mixture was filtered and the remaining solid was washed with dichloromethane. The resulting solid was dried under a vacuum for 12 hours and was compressed using a hot press at 120°C and a pressure of 10 MPa for 2.5 hours. The resulting sample showed a significantly quicker stress relaxation compared to the original MR-8 material.

## Claims

1. A method for recycling a thermoset spectacle lens material comprising,
providing a catalyst to the thermoset spectacle lens material,
wherein the thermoset spectacle lens material is in the form of particles and/or powder, and
wherein the catalyst enables and/or facilitates the reversible exchange reactions of at least one functional group in the thermoset spectacle lens material, thereby performing a catalytic vitrimerization of the thermoset spectacle material, **characterized in that** the thermoset spectacle lens material has a yellowness index of 5.5 or less measured according to ASTM E313 and/or a haze of 2.0 or less measured according to ASTM D1003,
the catalyst is provided by being dissolved and/or dispersed in a solvent, and the recycled thermoset spectacle lens material has a yellowness index of 5.5 or less measured according to ASTM E313 and/or a haze of 2.0 or less measured according to ASTM D1003.

2. The method according to Claim 1,
**characterized by** adding no additional free functional groups,
wherein the thermoset spectacle lens material is at least one selected from the group consisting of polythiourethane, polyepisulfide, polyurethane and polyurethane/polyurea.

3. The method according to Claim 2,
**characterized in that** the thermoset spectacle lens material is polyepisulfide.

4. The method according to Claim 1,
**characterized by** adding additional free functional groups,
wherein
(a) the additional free functional group is thiol group, and the thermoset spectacle lens material is polythiourethane spectacle lens material,
(b) the additional free functional group is hydroxyl group, and the thermoset spectacle lens material is polyallydiglycol carbonate spectacle lens material,
(c) the additional free functional group is thiol group, and the thermoset spectacle lens material is polyepisulfide spectacle lens material,
(d) the additional free functional group is hydroxyl group, and the thermoset spectacle lens material is polyurethane spectacle lens material, or
(e) the additional free functional group is hydroxy group and/or amine group, and the thermoset spectacle lens material is a polyurea/polyurethane spectacle lens material.

5. The method according to any one of the preceding claims,
**characterized in that** the thermoset spectacle lens material further comprises at least one additive selected from the group consisting of colorants, UV absorbers, mold release agents, antioxidants, antifoaming agents, and organic or inorganic particle.

6. The method for manufacturing a thermoset spectacle lens with the thermoset spectacle lens material recycled according to any one of the preceding claims.

7. A recycled thermoset spectacle lens material comprising a catalyst that enables and/or facilitates the reversible exchange reactions of at least one functional group in the thermoset spectacle lens material and performs a catalytic vitrimerization of the thermoset spectacle material during subsequent recycling of the recycled thermoset spectacle lens material,
**characterized by** having a yellowness index of 5.5 measured according to ASTM E313 or less and/or a haze of 2.0 or less measured according to ASTM D1003.

8. The recycled thermoset spectacle lens material according to Claim 7,
**characterized in that** the recycled thermoset spectacle material is at least one selected from the group consisting of polythiourethane, polyepisulfide, polyallyldiglycol carbonate, polyurethane and polyurethane/polyurea.

9. A method for manufacturing a recyclable thermoset spectacle lens material with a thermoset polymer,
**characterized by** providing the thermoset polymer where monomer and/or oligomer of the thermoset polymer is admixed with a catalyst that enables and/or facilitates the reversible exchange reactions of at least one functional group in the thermoset polymer and performs a catalytic vitrimerization during subsequent recycling of the recyclable thermoset spectacle lens material,
wherein the recyclable thermoset spectacle lens material has a yellowness index of 5.5 or less measured according to ASTM E313 and/or a haze of 2.0 or less measured according to ASTM D1003.

10. The method according Claim 9,
**characterized by** adding no additional free functional groups to the thermoset polymer, wherein the thermoset polymer is at least one selected from the group consisting of polythiourethane, polyepisulfide, polyurethane and polyurethane/polyurea.

11. The method according to Claim 9,
**characterized by** adding additional free functional group, wherein
(a) the additional free functional group is thiol group, and the thermoset polymer is polythiourethane,
(b) the additional free functional group is hydroxyl group, and the thermoset polymer is polyurethane,
(c) the additional free functional group is hydroxyl group, and the thermoset polymer is polyallydiglycol carbonate,
(d) the additional free functional group is thiol group, and the thermoset polymer is polyepisulfide, or
(e) the additional free functional group is hydroxy group and/or amine group, and the thermoset polymer is a polyurea/polyurethane.

12. The method for recycling the thermoset spectacle lens material manufactured according to any one of Claims 9 to 11,
**characterized by** providing the prepared spectacle lens material as particles and/or powder, and recycling the spectacle lens material without adding a catalyst that enables and/or facilitates the reversible exchange reactions of at least one functional group to the thermoset spectacle lens material.

13. A thermoset spectacle lens composition for manufacturing a spectacle lens
comprising a thermoset spectacle lens material,
**characterized in that** the composition further comprises a catalyst that enables and/or facilitates the reversible exchange reactions of at least one functional group in the thermoset spectacle lens material and performs a catalytic vitrimerization during recycling of the manufactured spectacle lens,
wherein the thermoset spectacle lens composition and the manufactured spectacle lens have a yellowness index of 5.5 or less measured according to ASTM E313 and/or a haze of 2.0 or less measured according to ASTM D1003, and
the manufactured spectacle lens can be recycled by vitrimerization without adding foreign materials.

14. The thermoset spectacle lens composition according to Claim 13,
**characterized in that** the thermoset spectacle lens material is selected from the group consisting of polyurethane, polyepisulfide, polyurethane and polyurethane/polyurea.

15. A spectacle lens manufactured by using the thermoset spectacle lens composition according to claim 13 or 14,
**characterized in that** the spectacle lens can be recycled by vitrimerization without adding foreign materials.

## Patentansprüche

1. Verfahren zum Recycling eines duroplastischen Brillenglasmaterials, umfassend
Bereitstellen eines Katalysators für das duroplastische Brillenglasmaterial,
wobei das duroplastische Brillenglasmaterial in Form von Partikeln und/oder Pulver vorliegt, und
wobei der Katalysator reversible Austauschreaktionen von mindestens einer funktionellen Gruppe in dem duroplastischen Brillenglasmaterial ermöglicht und/oder insbesondere erleichtert, wodurch eine katalytische Vitrimerisation des duroplastischen Brillenmaterials durchgeführt wird,
**dadurch gekennzeichnet, dass** das duroplastische Brillenglasmaterial einen Gelbwert von höchstens 5,5 gemäß ASTM E313 und/oder eine Trübung von höchstens 2,0 gemäß ASTM D1003 aufweist,
der Katalysator durch Auflösen und/oder Dispergieren in einem Lösungsmittel bereitgestellt wird, und
das recycelte, duroplastische Brillenglasmaterial einen Gelbwert von höchstens 5,5 gemäß ASTM E313 und/oder eine Trübung von höchstens 2,0 gemäß ASTM D1003 aufweist.

2. Verfahren nach Anspruch 1,
**gekennzeichnet durch** das Hinzufügen keiner zusätzlichen freien funktionellen Gruppen,
wobei das duroplastische Brillenglasmaterial mindestens eines ist, ausgewählt aus der Gruppe, bestehend aus Polythiourethan, Polyepisulfid, Polyurethan und Polyurethan/Polyharnstoff.

3. Verfahren nach Anspruch 2,
**dadurch gekennzeichnet, dass** das duroplastische Brillenglasmaterial Polyepisulfid ist.

4. Verfahren nach Anspruch 1,
**gekennzeichnet durch** das Hinzufügen zusätzlicher freier funktioneller Gruppen,
wobei
(a) die zusätzliche freie funktionelle Gruppe eine Thiolgruppe ist und das duroplastische Brillenglasmaterial Polythiourethan-Brillenglasmaterial ist,
(b) die zusätzliche freie funktionelle Gruppe eine Hydroxylgruppe ist und das duroplastische Brillenglasmaterial Polyallyldiglykolcarbonat-Brillenglasmaterial ist,
(c) die zusätzliche freie funktionelle Gruppe eine Thiolgruppe ist und das duroplastische Brillenglasmaterial ein Polyepisulfid-Brillenglasmaterial ist,
(d) die zusätzliche freie funktionelle Gruppe eine Hydroxylgruppe ist und das duroplastische Brillenglasmaterial Polyurethan-Brillenglasmaterial ist, oder
(e) die zusätzliche freie funktionelle Gruppe eine Hydroxygruppe und/oder eine Amingruppe ist, und das duroplastische Brillenglasmaterial ein Polyharnstoff/Polyurethan-Brillenglasmaterial ist.

5. Verfahren nach einem der vorhergehenden Ansprüche, **dadurch gekennzeichnet, dass** das duroplastische Brillenglasmaterial ferner mindestens einen Zusatzstoff umfasst, ausgewählt aus der Gruppe, bestehend aus Farbstoffen, UV-Absorbern, Trennmitteln, Antioxidantien, Entschäumern und organischen oder anorganischen Partikeln.

6. Verfahren zum Fertigen eines duroplastischen Brillenglases, wobei das duroplastische Brillenglasmaterial gemäß einem der vorhergehenden Ansprüche recycelt wird.

7. Recyceltes, duroplastisches Brillenglasmaterial, umfassend einen Katalysator, der reversible Austauschreaktionen von mindestens einer funktionellen Gruppe in dem duroplastischen Brillenglasmaterial ermöglicht und/oder insbesondere erleichtert und eine katalytische Vitrimerisation des duroplastischen Brillenmaterials während eines darauffolgenden Recyclings des recycelten, duroplastischen Brillenglasmaterials durchführt,
**gekennzeichnet durch** einen Gelbwert von höchstens 5,5 gemäß ASTM E313 und/oder eine Trübung von höchstens 2,0 gemäß ASTM D1003.

8. Recyceltes, duroplastisches Brillenglasmaterial nach Anspruch 7,
**dadurch gekennzeichnet, dass** das recycelte, duroplastische Brillenmaterial mindestens eines ist, ausgewählt aus der Gruppe, bestehend aus Polythiourethan, Polyepisulfid, Polyallyldiglykolcarbonat, Polyurethan und Polyurethan/Polyharnstoff.

9. Verfahren zum Fertigen eines recycelbaren, duroplastischen Brillenglasmaterials mit einem duroplastischen Polymer,
**dadurch gekennzeichnet, dass** das duroplastische Polymer bereitgestellt wird, wobei Monomer und/oder Oligomer des duroplastischen Polymers mit einem Katalysator vermischt ist, der die reversiblen Austauschreaktionen mindestens einer funktionellen Gruppe im duroplastischen Polymer ermöglicht und/oder erleichtert und eine katalytische Vitrimerisation während des anschließenden Recyclings des recycelbaren duroplastischen Brillenglasmaterials durchführt,
wobei das recycelbare, duroplastische Brillenglasmaterial einen Gelbwert von höchstens 5,5 gemäß ASTM E313 und/oder eine Trübung von höchstens 2,0 gemäß ASTM D1003 aufweist.

10. Verfahren nach Anspruch 9,
**dadurch gekennzeichnet, dass** dem duroplastischen Polymer keine zusätzlichen freien funktionellen Gruppen hinzugefügt werden, wobei es sich bei dem duroplastischen Polymer um mindestens eines handelt, ausgewählt aus der Gruppe, bestehend aus Polythiourethan, Polyepisulfid, Polyurethan und Polyurethan/Polyharnstoff.

11. Verfahren nach Anspruch 9,
**gekennzeichnet durch** das Hinzufügen zusätzlicher freier funktioneller Gruppen, wobei
(a) die zusätzliche freie funktionelle Gruppe eine Thiolgruppe ist und das duroplastische Polymer Polythiourethan ist,
(b) die zusätzliche freie funktionelle Gruppe eine Hydroxylgruppe ist und das duroplastische Polymer Polyurethan ist,
(c) die zusätzliche freie funktionelle Gruppe eine Hydroxylgruppe ist und das duroplastische Polymer Polyallyldiglykolcarbonat ist,
(d) die zusätzliche freie funktionelle Gruppe eine Thiolgruppe ist und das duroplastische Polymer Polyepisulfid ist, oder
(e) die zusätzliche freie funktionelle Gruppe eine Hydroxygruppe und/oder eine Amingruppe ist, und das duroplastische Polymer ein Polyharnstoff/Polyurethan ist.

12. Verfahren zum Recycling von duroplastischem Brillenglasmaterial, gefertigt nach einem der Ansprüche 9 bis 11,
**gekennzeichnet durch** das Bereitstellen des erzeugten Brillenglasmaterials als Partikel und/oder Pulver und Recycling des Brillenglasmaterials ohne Hinzufügen eines Katalysators, der reversible Austauschreaktionen von mindestens einer funktionellen Gruppe ermöglicht und/oder insbesondere erleichtert, zu dem duroplastischen Brillenglasmaterial.

13. Duroplastische Brillenglaszusammensetzung zum Fertigen eines Brillenglases, umfassend ein duroplastisches Brillenglasmaterial,
**dadurch gekennzeichnet, dass** die Zusammensetzung ferner einen Katalysator umfasst, der die reversiblen Austauschreaktionen mindestens einer funktionellen Gruppe im duroplastischen Brillenglasmaterial ermöglicht und/oder erleichtert und während des Recyclings des gefertigten Brillenglases eine katalytische Vitrimerisation durchführt,
wobei die duroplastische Brillenglaszusammensetzung und das gefertigte Brillenglas einen Gelbwert von höchstens 5,5 gemäß ASTM E313 und/oder eine Trübung von höchstens 2,0 gemäß ASTM D1003 aufweisen, und
das gefertigte Brillenglas durch Vitrimerisation ohne Zugabe von Fremdmaterialien recycelt werden kann.

14. Duroplastische Brillenglaszusammensetzung nach Anspruch 13,
**dadurch gekennzeichnet, dass** das duroplastische Brillenglasmaterial ausgewählt ist aus der Gruppe, bestehend aus Polyurethan, Polyepisulfid, Polyurethan und Polyurethan/Polyharnstoff.

15. Brillenglas, gefertigt unter Verwendung der duroplastischen Brillenglaszusammensetzung gemäß Anspruch 13 oder 14,
**dadurch gekennzeichnet, dass** das Brillenglas durch Vitrimerisation ohne Zugabe von Fremdmaterialien recycelt werden kann.

## Revendications

1. Procédé destiné à recycler un matériau de verre de lunettes thermodurci comprenant
l'application d'un catalyseur au matériau de verre de lunettes thermodurci,
dans lequel le matériau de verre de lunettes thermodurci se présente sous la forme de particules et/ou de poudre, et
dans lequel le catalyseur permet et/ou facilite les réactions réversibles d'échange d'au moins un groupe fonctionnel dans le matériau de verre de lunettes thermodurci, ce qui permet d'effectuer une vitrimérisation catalytique du matériau de lunettes thermodurci,
**caractérisé en ce que** le matériau de verre de lunettes thermodurci possède un indice de jaunissement de 5,5 ou moins mesuré conformément à la norme ASTM E313 et/ou un voile de 2,0 ou moins mesuré conformément à la norme ASTM D1003,
le catalyseur est appliqué à l'état dissous et/ou dispersé dans un solvant, et
le matériau de verre de lunettes thermodurci recyclé possède un indice de jaunissement de 5,5 ou moins mesuré conformément à la norme ASTM E313 et/ou un voile de 2,0 ou moins mesuré conformément à la norme ASTM D1003.

2. Procédé selon la revendication 1,
**caractérisé par** l'absence d'ajout de groupes fonctionnels libres supplémentaires,
dans lequel le matériau de verre de lunettes thermodurci est au moins un matériau choisi dans le groupe constitué par le polythiouréthane, le polyépisulfure, le polyuréthane et le polyuréthane/polyurée.

3. Procédé selon la revendication 2,
**caractérisé en ce que** le matériau de verre de lunettes thermodurci est le polyépisulfure.

4. Procédé selon la revendication 1,
**caractérisé par** l'ajout de groupes fonctionnels libres supplémentaires,
dans lequel
(a) le groupe fonctionnel libre supplémentaire est un groupe thiol, et le matériau de verre de lunettes thermodurci est un matériau de verre de lunettes en polythiouréthane,
(b) le groupe fonctionnel libre supplémentaire est un groupe hydroxyle, et le matériau de verre de lunettes thermodurci est un matériau de verre de lunettes en carbonate de polyallydiglycol,
(c) le groupe fonctionnel libre supplémentaire est un groupe thiol, et le matériau de verre de lunettes thermodurci est un matériau de verre de lunettes en polyépisulfure,
(d) le groupe fonctionnel libre supplémentaire est un groupe hydroxyle, et le matériau de verre de lunettes thermodurci est un matériau de verre de lunettes en polyuréthane, ou
(e) le groupe fonctionnel libre supplémentaire est un groupe hydroxyle et/ou un groupe amino, et le matériau de verre de lunettes thermodurci est un matériau de verre de lunettes en polyurée/polyuréthane.

5. Procédé selon l'une quelconque des revendications précédentes,
**caractérisé en ce que** le matériau de verre de lunettes thermodurci comprend en outre au moins un additif choisi dans le groupe constitué par les colorants, les absorbeurs UV, les agents de démoulage, les antioxydants, les agents antimousse, et une particule organique ou inorganique.

6. Procédé destiné à fabriquer un verre de lunettes thermodurci avec le matériau de verre de lunettes thermodurci recyclé selon l'une quelconque des revendications précédentes.

7. Matériau de verre de lunettes thermodurci recyclé comprenant un catalyseur qui permet et/ou facilite les réactions réversibles d'échange d'au moins un groupe fonctionnel dans le matériau de verre de lunettes thermodurci et effectue une vitrimérisation catalytique du matériau de lunettes thermodurci lors d'un recyclage ultérieur du matériau de verre de lunettes thermodurci recyclé,
**caractérisé en ce qu'**il possède un indice de jaunissement de 5,5 ou moins mesuré conformément à la norme ASTM E313 et/ou un voile de 2,0 ou moins mesuré conformément à la norme ASTM D1003.

8. Matériau de verre de lunettes thermodurci recyclé selon la revendication 7,
**caractérisé en ce que** le matériau de lunettes thermodurci recyclé est au moins un matériau choisi dans le groupe constitué par le polythiouréthane, le polyépisulfure, le carbonate de polyallyldiglycol, le polyuréthane et le polyuréthane/polyurée.

9. Procédé destiné à fabriquer un matériau de verre de lunettes thermodurci recyclable avec un polymère thermodurci,
**caractérisé par** l'obtention du polymère thermodurci, un monomère et/ou oligomère du polymère thermodurci étant mélangé à un catalyseur qui permet et/ou facilite les réactions réversibles d'échange d'au moins un groupe fonctionnel dans le polymère thermodurci et effectue une vitrimérisation catalytique lors d'un recyclage ultérieur du matériau de verre de lunettes thermodurci recyclable,
dans lequel le matériau de verre de lunettes thermodurci recyclable possède un indice de jaunissement de 5,5 ou moins mesuré conformément à la norme ASTM E313 et/ou un voile de 2,0 ou moins mesuré conformément à la norme ASTM D1003.

10. Procédé selon la revendication 9,
**caractérisé par** l'absence d'ajout de groupes fonctionnels libres supplémentaires au polymère thermodurci, le polymère thermodurci étant au moins un polymère choisi dans le groupe constitué par le polythiouréthane, le polyépisulfure, le polyuréthane et le polyuréthane/polyurée.

11. Procédé selon la revendication 9,
**caractérisé par** l'ajout d'un groupe fonctionnel libre supplémentaire, dans lequel
(a) le groupe fonctionnel libre supplémentaire est un groupe thiol, et le polymère thermodurci est le polythiouréthane,
(b) le groupe fonctionnel libre supplémentaire est un groupe hydroxyle, et le polymère thermodurci est le polyuréthane,
(c) le groupe fonctionnel libre supplémentaire est un groupe hydroxyle, et le polymère thermodurci est le carbonate de polyallydiglycol,
(d) le groupe fonctionnel libre supplémentaire est un groupe thiol, et le polymère thermodurci est le polyépisulfure, ou
(e) le groupe fonctionnel libre supplémentaire est un groupe hydroxyle et/ou un groupe amino, et le polymère thermodurci est une polyurée/polyuréthane.

12. Procédé destiné à recycler le matériau de verre de lunettes thermodurci fabriqué selon l'une quelconque des revendications 9 à 11,
**caractérisé par** l'obtention du matériau de verre de lunettes préparé sous forme de particules et/ou de poudre, et le recyclage du matériau de verre de lunettes sans ajout de catalyseur qui permet et/ou facilite les réactions réversibles d'échange d'au moins un groupe fonctionnel avec le matériau de verre de lunettes thermodurci.

13. Composition de verre de lunettes thermodurcie destinée à la fabrication d'un verre de lunettes comprenant un matériau de verre de lunettes thermodurci, **caractérisée en ce que** la composition comprend en outre un catalyseur qui permet et/ou facilite les réactions réversibles d'échange d'au moins un groupe fonctionnel dans le matériau de verre de lunettes thermodurci et effectue une vitrimérisation catalytique lors du recyclage du verre de lunettes fabriqué,
la composition de verre de lunettes thermodurcie et le verre de lunettes fabriqué possédant un indice de jaunissement de 5,5 ou moins mesuré conformément à la norme ASTM E313 et/ou un voile de 2,0 ou moins mesuré conformément à la norme ASTM D1003, et
le verre de lunettes fabriqué pouvant être recyclé par vitrimérisation sans ajout de matières étrangères.

14. Composition de verre de lunettes thermodurcie selon la revendication 13,
**caractérisée en ce que** le matériau de verre de lunettes thermodurci est choisi dans le groupe constitué par le polyuréthane, le polyépisulfure, le polyuréthane et le polyuréthane/polyurée.

15. Verre de lunettes fabriqué au moyen de la composition de verre de lunettes thermodurcie selon la revendication 13 ou 14,
**caractérisé en ce que** le verre de lunettes peut être recyclé par vitrimérisation sans ajout de matières étrangères.
